# EUROPEAN PATENT APPLICATION

(11) **EP 3 910 577 A1**
(43) Date of publication of application: **17.11.2021**
(21) Application number: 21174100.4
(22) Date of filing: 17.05.2021
(51) Int. Cl.: G06Q 10/10

(54) **ELECTRONIC TAG AND RELEVANT METHOD FOR SHARING PERSONAL CONTACTS BETWEEN MOBILE DEVICES**

(30) Priority: 15.05.2020 IT 202000010846
(71) Applicant: Pulsar S.r.l., 40138 Bologna (BO) (IT)
(72) Inventor: HARBAS, Bahrudin, 21100 Varese (VA) (IT)
(74) Representative: Provvisionato, Paolo

(57) **Abstract**

An electronic tag (12) which can share personal contacts between mobile devices comprises an NFC technology chip ("Near Field Communication") which can be read at short range by a receiving mobile device which is compatible with NFC technology. The electronic tag (12) is programmed with the storage of a single target link (URL) to be transmitted to the mobile device. The single link directs to a web resource on which there are collected information items which are correlated with each other and which relate to the contacts of the user who owns the electronic tag (12). The electronic tag is used in a method for sharing personal contacts between mobile devices, which comprises the step of storing the contact data which are grouped under a single user profile, obtaining a unique URL and storing the URL on the electronic tag (12).

## Description

### Field of the invention

The present invention relates to an electronic tag and a method capable of sharing personal contacts between mobile devices by means of wireless connection, in particular by means of "Near Field Communication" technology.

### Technological background

It is known that there exist many technologies which allow data to be shared between mobile devices in wireless mode, for example, by means of WiFi networks, RFID, Bluetooth and NFC.

The wireless technology NFC, which is an acronym for "Near Field Communication", is used to set up a peer-to-peer network between two devices, for example, portable devices, such as smart phones and the like, as a result of which the two devices can send and receive information items to/from each other.

An example of information sharing from one mobile device to another is described in US 2015/0009152. This document describes a method for sharing a software application from one portable device to another, via the display on the screen of an image which corresponds to the application. By touching the image for a sufficiently long time, there appears on the screen a sharing window, via which it is possible to share the application with the other device.

Another system for sharing information between mobile devices is described in US 2016/0203352. This system uses an encoded graphic image with scannable information items, such as a bar code or a QR code. There is described a device for mobile communication such as a smart phone, a tablet computer or another mobile computer which includes a client scanning module for scanning and communicating information items to a server. The QR code scanning is carried out by a camera module of the smart phone. The client scanning module communicates the acquired information items of the QR code to a server application which is associated for collecting, processing and signalling the scanning data.

The known systems are optimized for the transmission from one device to the other of a specific information item which is obtained by the relevant specific application. For example, the known systems can collect the data of a contact of the directory (the so-called electronic business card), or a website, or a group of images selected in a photograph archive application, the data of a credit card, etc., and can transmit it to another mobile device by way of one of the wireless means mentioned above.

With the increase in the complexity and the number of applications available on the mobile systems, and the variety of the contact platforms used by the users, it is becoming more and more difficult to supply all the personal contact information items to another person. In fact, the conventional paper-based business card is no longer sufficient to contain all the information items and increasingly often the persons print thereon in addition to the essential information items, such as, for example, name and surname, a QR code which directs to a web site where there are listed all the other data which it is intended to transmit, for example, a web page for a personal profile, or the web page for business contact, etc.

The exchange system by means of reading a QR code is not particularly efficient because it is necessary for the recipient to move close to the QR code and to frame it with the individual camera, which is something which is not always easy or possible. The objective of the camera could be dirty or damaged and therefore ineffective, or the code itself could be illegible because it is damaged or poorly contrasted.

The transmission of an electronic business card derived from the individual electronic directory is not an effective solution because the fields provided for the collection of the personal information items are limited. Some electronic directories allow the addition of free fields or notes but in this case the personal information items would not be structured and the recipient could have difficulty in recording them in an organized manner on his/her own mobile device and in recovering them readily where applicable.

### Statement of invention

The present invention allows the limitations of sharing of the prior art to be overcome, among which the above-mentioned limitations stand out, allowing the simple and effective transmission of a number of contacts, which are grouped together under a single profile, to a mobile device which is provided with NFC "Near Field Communication" technology.

In the context of this invention, the term "contacts" is intended to be understood to be data and information items relating to a person, in particular who intends to transmit such data items to one or more intended recipients. For example, the transmitter may, by means of an individual mobile device, share personal contacts, such as email addresses, telephone numbers, websites and social profiles in a simple, secure and reliable manner to a receiving mobile device.

In order to achieve these objectives and other objectives, the invention relates to an electronic tag having the features set out in the appended claims. The invention further relates to a method for sharing personal contacts between mobile devices which is also defined in the appended claims.

In particular, the electronic tag of the present invention is provided with an NFC chip which allows a plurality of personal contacts to be shared without the recipient therefore being limited to receiving a single and unique contact for sharing. The present invention allows the limitations of sharing of the known systems to be overcome, allowing the sharing and sending of several contacts correlated with each other, such as, for example, the email addresses, telephone numbers, websites and social profiles of the owner of the electronic tag, simply by approaching a compatible device with NFC technology, such as, for example, a latest-generation smart phone.

### Brief description of the drawings

Additional features and advantages will be appreciated from the following detailed description of a preferred embodiment with reference to the appended drawings which are given purely by way of non-limiting example and in which:
- Figure 1 is a perspective view of an electronic tag according to the present invention which is applied as an adhesive to the rear of a smart phone in order to make sharing contacts easier between mobile devices; and
- Figure 2 is a schematic view of an example on the smart phone of the accessible recipient by means of a single link (URL) which is obtained with NFC transmission from the electronic tag of Figure 1, on which there are displayed the personal contacts of the user who owns the electronic tag.

### Detailed description

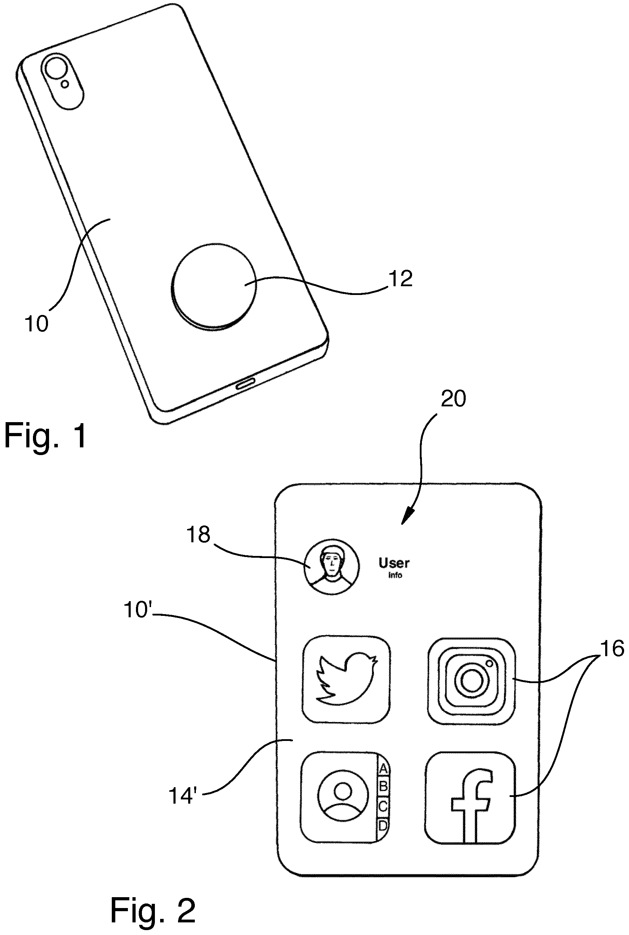

With reference to Figure 1, there is illustrated as a perspective view a smart phone 10, to the rear of which an electronic tag 12 is applied. The electronic tag 12 may be provided as a gadget or accessory and may advantageously be fixed with an adhesive to the rear of the smart phone 10. The electronic tag 12 can be produced with any dimensions, colour or from any material. The electronic tag comprises an NFC chip therein so as to allow the communication with devices which are compatible with this technology, in particular by approaching the electronic tag 12 up to a device or smart phone which is compatible with such technology. The transmission of the data between the electronic tag 12 and a compatible device which is provided with NFC technology is carried out by means of short-range communication, which facilitates the contactless wireless sharing and which at the same time provides for collecting the information items by a device which is placed at a greater distance so that the owner of the electronic tag can maintain a given control over the transmission of his/her own contact data in the same way that it is used to exchange the individual paper-based business card only with the nearest person.

In a preferred though non-limiting embodiment of the invention, the electronic tag 12 is previously programmed by means of a compatible NFC module or one which is suitably generated for the purpose. In particular, there may be loaded on the electronic tag a link, that is to say, a URL (Uniform Resource Locator) which identifies a specific internet site, on which all the contacts which it is desirable to share have been loaded beforehand, such as, for example, the email addresses, telephone numbers, websites and social profiles of the owner of the electronic tag 12. The loading of the individual data by the owner of the electronic tag can be carried out by accessing an application, a portal, a specialized site dedicated to this system or in another generally known manner.

Once programmed with the link to the contacts and the personal information items of the owner thereof, the electronic tag 12 can be moved towards another device which is enabled for reading an NFC tag, such as another smart phone, in the possession of the recipient. The recipient, as a result of the NFC data transmission by the electronic tag 12 to the individual NFC device, will receive the link which is stored on the electronic tag 12 and therewith the ability to access the contacts and the personal information items which the owner of the electronic tag has stored beforehand on the website which can be reached using the above-mentioned link. Therefore, the recipient will receive all the contacts and the personal information items of the transmitter via a simple touch of acceptance of the NFC communication on the individual mobile device.

As illustrated in Figure 2, the recipient may gain access via the link supplied by the electronic tag 12 by means of NFC communication to a web page in which the contacts and the personal information items of the owner of the electronic tag 12 are collected. In particular, using a simple touch on the individual mobile device, the recipient can display on the screen 14' of the individual smart phone 10' provided with NFC technology the user image 18 with the basic information items 20 of the user, for example, name and surname or other call sign. There can be displayed on the screen 14' the icons 16 which directly address the personal and social contacts of the user. The number, arrangement and type of information items which the recipient can display on the individual screen 14' naturally depend on the specific display implementation and the quantity and type of information items loaded beforehand by the user who owns the electronic tag 12. In particular, what the recipient can display once he/she has gained access to the web resource identified by the link (URL) obtained by the electronic tag 12 is defined by the user who owns the electronic tag 12, for example, by means of a user interface where it is possible to select what, how many and how the icons 16 visible to the recipient are arranged. The icons 16 which are transmitted to the screen 14' of the recipient can be in turn active links which can be touched or clicked in order to access the specific profile of the user, for example, a Facebook, Instagram, Twitter social profile, and the like.

As mentioned, the user who owns the electronic tag 12 can manage the individual personal data by associating them with the unique link which is subsequently programmed on the electronic tag 12. The management of the individual personal data can be carried out in known manner by accessing a storage and management platform for the individual personal contacts and information items by means of a dedicated application on the individual mobile device, or by means of access via a web browser, as generally known. In particular, the user can generate the individual personal profile by means of a user interface. The individual personal profile can be achieved by means of a web resource (http(s)) with an identifier or link (URL) which is stored on the electronic tag 12.

The invention allows the problems of the prior art to be overcome, and in particular allows the provision of a single link (URL) to be shared, by means of which it is therefore possible to access a plurality of personal contacts and data. In this manner, the methods for sharing the individual personal data are simplified and accelerated without any need to use multiple transmissions, each transmission for each contact which it is desirable to share, as is instead necessary in the prior art.

Furthermore, the invention allows sharing of a plurality of personal data and contact information items without any need for the recipient to use the same application as the user or a specific application. In fact, when the link stored on the electronic tag and transmitted to the mobile device of the recipient by means of the immediate NFC communication is received, the recipient can be immediately directed to a web page or similar site which shows all the personal data and the contact information items which are deliberately made available beforehand by the user who owns the electronic tag. The single condition placed on the recipient is to have a device which is compatible with NFC technology so that it currently has a virtually universal and widespread diffusion among owners of mobile devices such as smart phones and the like.

The system further allows rapid updating or simple integration of the personal data which are thereby always updated and available by means of the single link stored on the electronic tag.

Naturally, the principle of the invention remaining the same, the forms of embodiment and details of construction may be varied widely with respect to those described and illustrated, without thereby departing from the scope of the present invention.

## Claims

1. An electronic tag which can share personal contacts between mobile devices, comprising an NFC technology chip ("Near Field Communication") which can be read at short range by a receiving mobile device which is compatible with NFC technology, the electronic tag (12) being programmed with the storage of a single target link (URL) which is intended to be transmitted to the mobile device and which directs to a web resource on which there are collected information items which are correlated with each other and which relate to the contacts of the user who owns the electronic tag (12).

2. An electronic tag according to claim 1, constructed in the form of a gadget or accessory which can be applied by means of adhesive to the rear of a smart phone (10) of the user who owns the electronic tag (12).

3. A method for sharing personal contacts between mobile devices, using an electronic tag (12) according to claim 1 or claim 2, comprising the steps of:
- storing on a web resource a plurality of contact data of a user which are grouped under a single user profile;
- obtaining a unique web access URL for the plurality of contact data which are loaded by the user;
- storing the URL on the electronic tag (12) with NFC technology;
- approaching a mobile device which is compatible with NFC technology up to the electronic tag (12) until the unique URL stored on the electronic tag (12) is received on the mobile device;
- accessing the web resource which is identified by the unique URL in order to request the transmission to the mobile device of the plurality of contact data of the user collected under the single user profile.

4. A method according to claim 3, wherein the plurality of contact data of the user are loaded via a user interface which is accessible via smart phone by the user who owns the electronic tag (12).

5. A method according to claim 3 or according to claim 4, wherein the approach of the mobile device towards the electronic tag (12) is carried out at short range.

6. A method according to any one of claims 3 to 5, further comprising the step of fixing the electronic tag (12) to the rear of the mobile device (10) of the user.

7. A method according to any one of claims 3 to 6, comprising the step of selecting a group of icons (16) which indicate the contact data which are loaded on the web resource in order to activate the selective transmission thereof to the mobile device (10') of the recipient following the request of the web resource identified by the single URL which is stored on the electronic tag (12).
